# EUROPÄISCHE PATENTANMELDUNG

(11) **EP 2 602 514 A1**
(43) Veröffentlichungstag der Anmeldung: **12.06.2013**
(21) Anmeldenummer: 12007408.3
(22) Anmeldetag: 30.10.2012
(51) Int. Cl.: F16H 57/04, F03D 11/02

(54) **Planetengetriebe, insbesondere für Windkraftanlagen, mit einem Ölkanal zur Schmierung von Planetenlagern**

(30) Priorität: 09.12.2011 DE 102011120669
(71) Anmelder: ROBERT BOSCH GMBH, 70442 Stuttgart (DE)
(72) Erfinder: Floren, Ansgar, 53757 Sankt Augustin (DE)
(74) Vertreter: Wiesmann, Stephan

(57) **Zusammenfassung**

Die Erfindung betrifft ein Planetengetriebe mit mindestens einer Planetenstufe, umfassend ein über Planetenräder (2) mit einem äußeren Hohlrad (1) verbundenes Sonnenrad (3), wobei zur Schmierung des jedem Planetenrad (2) zugeordneten Planetenlagers (5) in einem die Planetenräder (2) haltenden Planetenträger (4) ein Ölkanal (7) ausgebildet ist, der eine Ölzuführung zu einer Planetenbolzenbohrung (6) zur Aufnahme eines Planetenbolzens für das Planetenlager (5) bildet, wobei der Ölkanal (7) einen in Umfangsrichtung beabstandet zur Planetenbolzenbohrung (6) angeordneten radialen ersten Ölkanalabschnitt (8) sowie einen quer hierzu angeordneten zweiten Ölkanalabschnitt (9) umfasst, welcher vom ersten Ölkanalabschnitt (8) kommend an der Planetenbolzenbohrung (6) einmündet.

## Beschreibung

Die Erfindung betrifft ein Planetengetriebe mit mindestens einer Planetenstufe, umfassend ein über Planetenräder mit einem äußeren Hohlrad verbundenes Sonnenrad, wobei zur Schmierung des jedem Planetenrad zugeordneten Planetenlagers in einem die Planetenräder haltenden Planetenträger ein Ölkanal ausgebildet ist, der eine Ölzuführung zu einer Planetenbolzenbohrung zur Aufnahme eines Planetenbolzens für das Planetenlager bildet.

Das Einsatzgebiet der Erfindung erstreckt sich vornehmlich auf die Windenergietechnik. Bei Windkraftanlagen werden Planetengetriebe der hier interessierenden Art dazu verwendet, eine langsame Drehzahl des Rotors der Windkraftanlage ins Schnelle zu übersetzen, um einen Generator zur Erzeugung elektrischer Energie zu betreiben. Für Windkraftanlagen höherer Leistung kommen mehrstufige Planetengetriebe zum Einsatz, welche auch leistungsverzweigt ausgeführt sein können. Insbesondere bei Planetengetrieben höherer Leistung ist eine zuverlässige Schmierung der Wälzlagerungen, insbesondere der Planetenlager, sicherzustellen.

Aus der EP 1 431 575 A2 geht ein Planetengetriebe für eine Windkraftanlage hervor, welche eine in einem Getriebegehäuse umlaufende Planetenstufe enthält. Die Planetenstufe besteht aus einem mit dem Rotor der Windkraftanlage verbundenen Planetenträger, der zwei durch Stege miteinander verbundene Seitenwangen aufweist, und aus mehreren über Planetenradlager in dem Planetenträger gelagerten Planetenrädern. Die Planetenräder stehen einerseits mit einem zentralen Sonnenrad und andererseits mit einem fest mit dem Getriebegehäuse verbundenen Hohlrad in Eingriff.

In dem Getriebegehäuse ist ein von einem Ölführungskanal durchdrungener Einsatzring fest angeordnet, wobei der Ölführungskanal des Einsatzringes an dem einen Ende mit einem durch die Wand des Getriebegehäuses hindurchführenden und mit einer Ölförderpumpe in Verbindung stehenden Ölzulauf und an dem anderen Ende über eine Ringnut mit mehreren durch eine der Seitenwangen des Planetenträgers hindurchgeführten Ölführungskanälen in Verbindung steht. Dabei sind durch die Achsen aller Planetenräder Ölführungskanäle hindurchgeführt, die mit den Ölführungskanälen an dem Planetenträger in Verbindung stehen und die zu den Planetenradlagern hin offen sind.

Die in den Seitenwangen des Planetenträgers eingebrachten Ölführungskanäle besitzen einen mehrfach abgewinkelten Verlauf und sind daher fertigungstechnisch auch recht aufwendig herzustellen. Weiterhin verlaufen diese Ölführungskanäle in einem Bereich des Planetenträgers, welcher während des Betriebs recht hohen Spannungen unterliegt. Hieraus resultiert eine erhöhte Bruchgefahr des Planetenträgers an der Stelle der von der Planetenbolzenbohrung nach radial innen verlaufenden Ölführungskanälen im Planetenträger.

Aus der US 2007/0049 448 A 1 geht eine technische Lösung hervor, welche eine kritische Anordnung der andererseits erforderlichen Ölführungskanäle für die Planetenlager dadurch löst, dass im Planetenträger selbst keine Ölführungskanäle eingebracht sind. Das zur Schmierung der Planetenlager erforderlich Öl wird über ein separates, neben dem Planetenträger angeordnetes ringförmiges Verteilungselement bereit gestellt, von dem aus axial gerichtete Ölleitungen zu den Planetenbolzen führen. Innerhalb der Planetenbolzen sind Füllführungskanäle eingebracht, welche das Öl in Radialrichtung an die Planetenlager weiterleitet.

Zwar ist mit dieser Lösung keine statische Schwächung des Planetenträgers verbunden; die separate und vom Planetenträger getrennte Ölzuführung erscheint jedoch technisch recht aufwendig.

Es ist daher die Aufgabe der vorliegenden Erfindung ein gattungsgemäßes Planetengetriebe dahingehend weiter zu verbessern, dass dessen Ölversorgung der Planetenlager in einfacher Weise und bauteilspannungsvermeidend erfolgt.

Die Aufgabe wird ausgehend von einem Planetengetriebe gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass der in dem Planetenträger eingebrachte Ölkanal einen im Umfangsrichtung beabstandet zur Planetenbolzenbohrung angeordneten radialen ersten Ölkanalabschnitt sowie einen quer hierzu angeordneten zweiten Ölkanalabschnitt umfasst, welcher vom ersten Ölkanalabschnitt kommend an der Planetenbolzenbohrung einmündet.

Der Vorteil der erfindungsgemäßen Lösung liegt insbesondere darin, dass der Ölkanal an spannungsunkritischer Stelle des Planetenträgers an die Planetenbolzenbohrung geführt wird. Im Prinzip verläuft der radiale erste Ölkanalabschnitt von der Mantelfläche des Planetenträgers in dessen Zentrum, ohne dass eine Kreuzung mit der Planetenbolzenbohrung stattfindet. Der zweite quer hierzu angeordnete Ölkanalabschnitt verläuft von der Mantelfläche des Planetenträgers zur Planetenbolzenbohrung, wobei gegebenenfalls eine - an späterer Stelle näher erläuterte - Brückenleitung dazwischen angeordnet ist. An der Einmündungsstelle des zweiten Ölkanalabschnitts in die Planetenbolzenbohrung ist die Bauteilspannung unkritisch. Eine kritische Bauteilspannung herrscht dagegen an der der Mantelfläche gegenüberliegenden inneren Seite der Planetenbolzenbohrung.

Vorzugsweise sollte der radiale erste Ölkanalabschnitt von einer zentralen Sonnenradbolzenbohrung des Planetenträgers durchgängig bis zur äußeren Mantelfläche des Planetenträgers verlaufen. Eine derartige Durchgangsbohrung lässt sich fertigungstechnisch in einfacher Weise in nur einem Bearbeitungsschritt herstellen.

Der zweite Ölkanalabschnitt kann gemäß verschiedener bevorzugter Ausführungsformen realisiert werden:

Gemäß einer ersten Ausführungsform wird vorgeschlagen, dass der zweite Ölkanalabschnitt von der äußeren Mantelfläche des Planetenträgers quer zum ersten Ölkanalabschnitt und diesen kreuzend seitlich an die Planetenbolzenbohrung führt. Somit kann der zweite Ölkanalabschnitt ebenfalls in Form einer einfach zu fertigenden Durchgangsbohrung erzeugt werden.

Um die Austrittsstellen der Ölkanalabschnitte an der Mantelfläche des Planetenträgers zu verschließen, wird vorgeschlagen, diese mit einem Verschlusselement abzudichten. Das Verschlusselement kann beispielsweise als eingepresste Stahlkugel ausgeführt sein.

Gemäß einer zweiten bevorzugten Ausführungsform ist der zweite Ölkanalabschnitt als eine äußere Brückenleitung ausgebildet, die von der Austrittsstelle des ersten Ölkanalabschnitts an der Mantelfläche des Planetenträgers zu einem dritten Ölkanalabschnitt verläuft, der von der Mantelfläche des Planetenträgers radial an der Planetenbolzenbohrung einmündet.

Dabei ist die äußere Brückenleitung vorzugsweise als eine Schlauch- oder Rohrdruckleitung ausgebildet. Daneben ist es jedoch auch denkbar, die Brückenleitung als Wellrohr oder einem anderen möglichst wärme- und längenkompensierenden Rohr auszuführen.

Gemäß der dritten bevorzugten Ausführungsform ist der zweite Ölkanalabschnitt als eine entlang der Mantelfläche des Planetenträgers verlaufende äußere Ringleitung ausgebildet, die von der Austrittsstelle des ersten Ölkanalabschnitts an der Mantelfläche des Planetenträgers zumindest an einem dritten Ölkanalabschnitt verläuft, der von der Mantelfläche des Planetenträgers radial an der je zugeordneten Planetenbolzenbohrung einmündet. Damit verläuft die Ringleitung entlang des gesamten Umfangs des Planetenträgers und kann ausgehend von einem einzigen radialen Ölkanalabschnitt alle Planetenbolzenbohrungen mit Schmieröl versorgen. Auch eine solche äußere Ölleitung ist vorzugsweise als Schlauch- oder Rohrdruckleitung ausgebildet und an der Mantelfläche des Planetenträgers befestigt.

Weitere die Erfindung verbessernde Maßnahmen werden nachstehend gemeinsam mit der Beschreibung der bevorzugten Ausführungsformen der Erfindung anhand der Figuren näher dargestellt. Es zeigt:
- Figur 1: eine schematische Vorderansicht eines Planetengetriebes,
- Figur 2: einen Längsschnitt durch einen Planetenträger des Planetengetriebes,
- Figur 3: eine schematische Seitenansicht des Planetenträgers mit einem hierin eingebrachten Ölkanal gemäß einer ersten Ausführungsform,
- Figur 4: eine schematische Seitenansicht des Planetenträgers mit einem hierin eingebrachten Ölkanal gemäß einer zweiten Ausführungsform, und
- Figur 5: eine schematische Seitenansicht des Planetenträgers mit einem hierin eingebrachten Ölkanal gemäß einer dritten Ausführungsform.

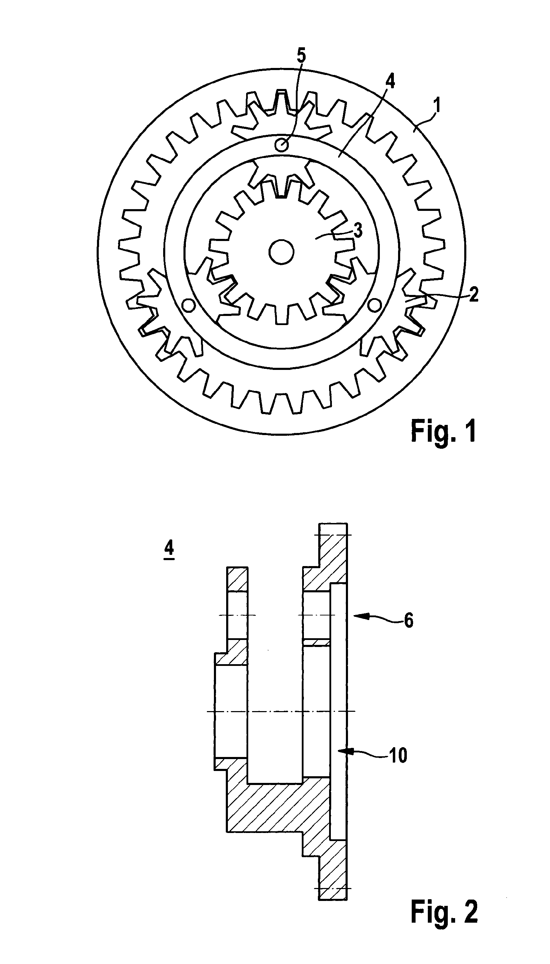

Gemäß Figur 1 besteht die schematisch dargestellte Planetenstufe eines - nicht weiter gezeigten - Planetengetriebes im Wesentlichen aus einem äußeren Hohlrad 1 mit einer Innenverzahnung, welche mit der Außenverzahnung mehrerer Planetenräder 2 (exemplarisch) in Eingriff steht. Die Planetenräder 2 kämmen wiederum mit einem zentralen Sonnenrad 3. Bei diesem Planetengetriebe ist das Hohlrad 1 ortsfest angeordnet. Der Antrieb erfolgt über einen die Planetenräder 2 haltenden Planetenträger 4 und der Abtrieb erfolgt über das Sonnenrad 3. Die Planetenräder 2 sind über je zugeordnete und als Wälzlager ausgeführte Planetenlager 5 drehend am Planetenträger 4 befestigt.

Der in Figur 2 dargestellte und aus einem Kugelgraphitgussmaterial bestehende Planetenträger 4 weist eine Planetenbolzenbohrung 6 auf, welche zur Aufnahme eines - nicht weiter dargestellten - Planetenbolzens für das ebenfalls nicht dargestellte Planetenlager 5 dient.

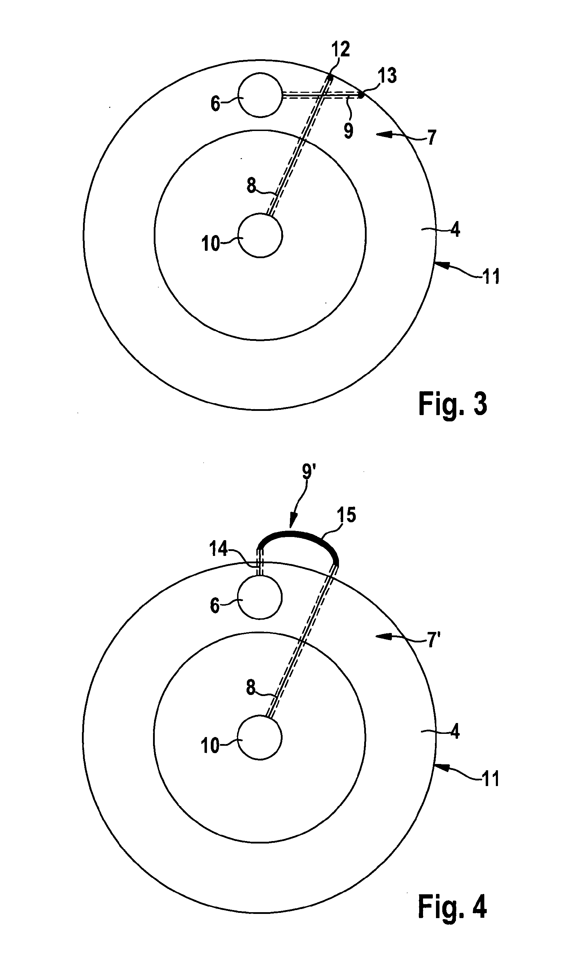

Gemäß Figur 3 ist im Planetenträger 4 ein Ölkanal 7 ausgebildet, der einen in Umfangsrichtung beabstandet zu der Planetenbolzenbohrung 6 angeordneten radialen ersten Ölkanalabschnitt 8 sowie einen quer hierzu angeordneten zweiten Ölkanalabschnitt 9 umfasst. Der zweite Ölkanalabschnitt 9 mündet vom ersten Ölkanalabschnitt 8 kommend an der Planetenbolzenbohrung 6 ein, um von hier aus über - nicht weiter dargestellte - interne Kanäle des Planetenbolzens Öl zur Planetenlagerung zu transportieren.

Der radiale erste Ölkanalabschnitt 8 verläuft von einer zentralen Sonnenradbolzenbohrung 10 des Planetenträgers 4 durchgängig bis zur äußeren Mantelfläche 11 des Planetenträgers 4.

Der zweite Ölkanalabschnitt 9 ist demgegenüber von der äußeren Mantelfläche 11 des Planetenträgers 4 quer zum ersten Ölkanalabschnitt 8 und diesen kreuzend seitlich an die Planetenbolzenbohrung 6 geführt. Der an der Mantelfläche 11 des Planetenträgers 4 austretende erste Ölkanalabschnitt 8 sowie auch das hier austretende Ende des zweiten Ölkanalabschnitts 9 sind an der Austrittsstelle zur Mantelfläche 11 mit einem Verschlusselement 12 beziehungsweise 13 in Form einer eingepressten Stahlkugel verschlossen.

Die in der Figur 4 dargestellte zweite Ausführungsform des Ölkanals 7' unterscheidet sich von der vorstehenden Ausführungsform darin, dass der zweite Ölkanalabschnitt 9' als eine äußere Brückenleitung ausgebildet ist, die von der Austrittsstelle des ersten Ölkanalabschnitts 8 an der Mantelfläche 11 des Planetenträgers 4 zu einem dritten Ölkanalabschnitt 14 verläuft. Der dritte Ölkanalabschnitt 14 geht von der Mantelfläche 11 des Planetenträgers 4 aus und mündet radial an der Planetenbolzenbohrung 6 ein. Die äußere Brückenleitung 15 ist hier als eine Schlauchleitung mit endseitigen Gewindeverschraubungen ausgeführt.

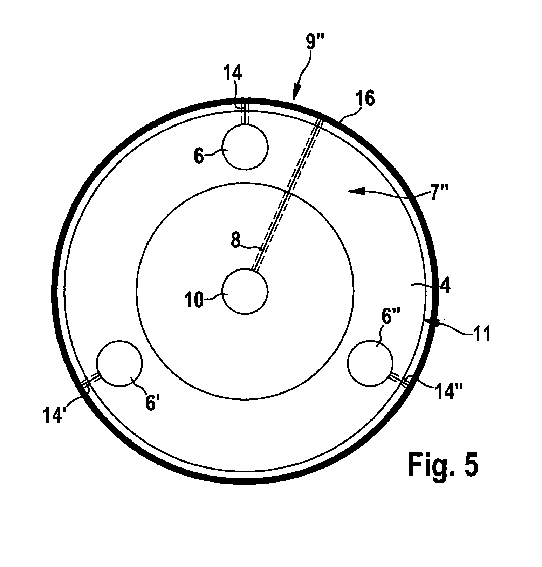

Bei der in Figur 5 dargestellten dritten Ausführungsform ist der zweite Ölkanalabschnitt 9" als eine entlang der Mantelfläche 11 des Planetenträgers 4 verlaufende äußere Ringleitung 16 ausgebildet. Die äußere Ringleitung 16 verläuft von der Austrittsstelle des ersten Ölkanalabschnitts 8 an der Mantelfläche 11 des Planetenträgers 4 zu drei weiteren dritten Ölkanalabschnitten 14 bis 14", welche von der Mantelfläche 11 des Planetenträgers 4 jeweils radial an die zugeordnete Planetenbolzenbohrungen 6 bis 6" einmünden.

Die Erfindung ist nicht beschränkt auf die vorstehend beschriebenen drei bevorzugten Ausführungsformen. Es ist vielmehr auch Abwandlungen hiervon denkbar, welche vom Schutzbereich der nachfolgenden Ansprüche mit umfasst sind.

### Bezugszeichenliste

- 1: Hohlrad
- 2: Planetenräder
- 3: Sonnenrad
- 4: Planetenträger
- 5: Planetenlager
- 6: Planetenbolzenbohrung
- 7: Ölkanal
- 8: erster Ölkanalabschnitt
- 9: zweiter Ölkanalabschnitt
- 10: Sonnenradbolzenbohrung
- 11: Mantelfläche
- 12: Verschlusselement
- 13: Verschlusselement
- 14: dritter Ölkanalabschnitt
- 15: Brückenleitung
- 16: Ringleitung

## Patentansprüche

1. Planetengetriebe mit mindestens einer Planetenstufe, umfassend ein über Planetenräder (2) mit einem äußeren Hohlrad (1) verbundenes Sonnenrad (3), wobei zur Schmierung des jedem Planetenrad (2) zugeordneten Planetenlagers (5) in einem die Planetenräder (2) haltenden Planetenträger (4) ein Ölkanal (7) ausgebildet ist, der eine Ölzuführung zu einer Planetenbolzenbohrung (6) zur Aufnahme eines Planetenbolzens für das Planetenlager (5) bildet,
**dadurch gekennzeichnet, dass** der Ölkanal (7) einen in Umfangsrichtung beabstandet zur Planetenbolzenbohrung (6) angeordneten radialen ersten Ölkanalabschnitt (8) sowie einen quer hierzu angeordneten zweiten Ölkanalabschnitt (9) umfasst, welcher vom ersten Ölkanalabschnitt (8) kommend an der Planetenbolzenbohrung (6) einmündet.

2. Planetengetriebe nach Anspruch 1,
**dadurch gekennzeichnet, dass** der radiale erste Ölkanalabschnitt (8) von einer Sonnenradbolzenbohrung (10) des Planetenträgers (4) durchgängig bis zur äußeren Mantelfläche (11) des Planetenträgers (4) verläuft.

3. Planetengetriebe nach Anspruch 1 oder 2,
**dadurch gekennzeichnet, dass** der zweite Ölkanalabschnitt (9) von der äußeren Mantelfläche (11) des Planetenträgers (4) quer zum ersten Ölkanalabschnitt (8) und diesen kreuzend seitlich an die Planetenbolzenbohrung (6) führt.

4. Planetengetriebe nach Anspruch 2 und 3,
**dadurch gekennzeichnet, dass** der an der Mantelfläche (11) des Planetenträgers (4) austretende erste Ölkanalabschnitt (8) und/oder der ebenfalls an der Mantelfläche (11) des Planetenträgers (4) austretende zweite Ölkanalabschnitt (9) als Bohrung ausgeführt sind, die an der Austrittsstelle zur Mantelfläche (11) mit einem Verschlusselement (12; 13) abgedichtet sind.

5. Planetengetriebe nach Anspruch 1 oder 2,
**dadurch gekennzeichnet, dass** der zweite Ölkanalabschnitt (9') als eine äußere Brückenleitung (15) ausgebildet ist, die von der Austrittsstelle des ersten Ölkanalabschnitts (8) an der Mantelfläche (11) des Planetenträgers (4) zu einem dritten Ölkanalabschnitt (14) verläuft, der von der Mantelfläche (11) des Planetenträgers (4) radial an der Planetenbolzenbohrung (6) einmündet.

6. Planetengetriebe nach Anspruch 5,
d**adurch gekennzeichnet,** dass die äußere Brückenleitung (15) als eine Schlauch-oder Rohrdruckleitung ausgebildet ist.

7. Planetengetriebe nach Anspruch 1 oder 2,
**dadurch gekennzeichnet, dass** der zweite Ölkanalabschnitt (9") als eine entlang der Mantelfläche (11) des Planetenträgers (4) verlaufende äußere Ringleitung (16) ausgebildet ist, die von der Austrittsstelle des ersten Ölkanalabschnitts (8) an der Mantelfläche (11) des Planetenträgers (4) zu mindestens einem dritten Ölkanalabschnitt (14, 14', 14") verläuft, der von der Mantelfläche (11) des Planetenträgers (4) radial an der je zugeordneten Planetenbolzenbohrung (6, 6', 6") einmündet.

8. Planetengetriebe nach Anspruch 1,
**dadurch gekennzeichnet, dass** die äußere Ringleitung (16) als eine Schlauch-oder Rohrdruckleitung ausgebildet ist.

9. Planetengetriebe nach einem der vorstehenden Ansprüche,
**dadurch gekennzeichnet, dass** der Planetenträger (4) aus einem Gussmaterial besteht.

10. Windkraftanlage mit einem Planetengetriebe nach einem der vorstehenden Ansprüche.
